# EUROPÄISCHE PATENTSCHRIFT

(11) **EP 1 312 525 B1**
(45) Veröffentlichungstag und Bekanntmachung des Hinweises auf die Patenterteilung: **21.09.2005**
(21) Anmeldenummer: 02025983.4
(22) Anmeldetag: 18.10.1996
(51) Int. Cl.: B60T 13/74, F16D 51/46

(54) **Verfahren zur Regelung der Selbstverstärkung einer selbstverstärkenden Reibungsbremse**
Method for controlling the self-amplification of a self-amplifying friction brake
Méthode de contrôle de l'auto-serrage d'un frein auto-serreur

(30) Priorität: 19.10.1995 DE 19539012
(43) Veröffentlichungstag der Anmeldung: 21.05.2003
(62) Teilanmeldung aus: 96934749.1
(73) Patentinhaber: Continental Teves AG & Co. oHG, 60488 Frankfurt am Main (DE)
(72) Erfinder: Bill, Karlheinz, Dr., 63303 Dreieich (DE); Dusil, Vladimir, 64347 Griesheim (DE); Leber, Matthias, 70599 Stuttgart (DE)

(56) Entgegenhaltungen:
- US-A- 4 627 519
- US-A- 5 036 960

## Beschreibung

Die Erfindung betrifft ein Verfahren zur Regelung der Selbstverstärkung einer selbstverstärkenden Reibungsbremse, bei der eine Addition der senkrecht auf den Reibbelag wirkenden Komponenten der Betätigungskraft und der durch die Selbstverstärkung bedingten Verstärkungskraft zu einer Normalkraft sowie eine Erzeugung der zwischen Reibbelag und Reibfläche wirkenden Reibkraft durch Wirkung der Normalkraft erfolgt, wobei die Reibungsbremse einen Verstellmechanismus zum Beeinflussen der Verstärkungskraft aufweist, und wobei ein die Reibkraft repräsentierendes Signal sowie ein die Betätigungskraft repräsentierendes Signal erzeugt werden.

Eine derartige Reibungsbremse ist aus der US-A-4,250,981 bekannt. Das Besondere an der vorbekannten Reibungsbremse besteht darin, dass sie mit Mitteln versehen ist, die eine Anpassung des aufzubringenden Bremsmoments an den Beladungszustand ermöglichen. Dadurch wird erreicht, dass bei einer Erhöhung der Fahrzeugbeladung eine Erhöhung der auf die Beläge wirkenden Betätigungskraft durch eine Änderung des Bremsenkennwerts C*, d.h., des Verhältnisses zwischen der an der Reibfläche wirkenden Bremskraft und der am Bremsbelag wirkenden Betätigungskraft, erfolgt.

Aus der US-A-5,036,960 ist eine selbstverstärkende Reibungsbremse bzw. hydraulisch betätigbare Scheibenbremse bekannt, in deren Betrieb eine Regelung stattfindet, die einer Stabilisierung des Verhältnisses zwischen einem Verstärkungsdruck und dem von einem Hauptbremszylinder erzeugten hydraulischen Druck dient. Der Bremsenkennwert C* ist durch die konstruktive Auslegung der entsprechenden druckbeaufschlagten Flächen fest vorgegeben. Dem Dokument sind jedoch keine Hinweise auf eine aktive Beeinflussung des Bremsenkennwertes bzw. der Selbstverstärkung C* zu entnehmen.

Es ist daher Aufgabe der vorliegenden Erfindung, ein Verfahren zur Regelung der Selbstverstärkung einer selbstverstärkenden Reibungsbremse vorzuschlagen, mit dessen Hilfe die gewünschte Selbstverstärkung eingeregelt werden kann.

Diese Aufgabe wird erfindungsgemäß dadurch gelöst, dass das die Reibkraft repräsentierende Signal sowie das die Betätigungskraft repräsentierende Signal zusammen mit einem die gewünschte Selbstverstärkung repräsentierenden Signal als Eingangsgrößen einem elektronischen Regler zugeführt werden, dessen Ausgangsgröße der Ansteuerung des Verstellmechanismus dient.

Weitere Einzelheiten, Merkmale und Vorteile der Erfindung gehen aus der nachfolgenden Beschreibung eines Ausführungsbeispiels unter Bezugnahme auf die beiliegende Zeichnung hervor, in der für einander entsprechende Einzelteile gleiche Bezugszeichen verwendet werden. In der Zeichnung zeigt:
- Fig. 1: eine Reibungs- bzw. Duplexbremse, bei der das erfindungsgemäße Verfahren angewandt werden kann;
- Fig. 2: den Schnitt "C - C" nach Fig. 1 in größerem Maßstab;
- Fig. 3: eine schematische Darstellung des Funktionsprinzips der in Fig. 1 und 2 gezeigten Reibungs- bzw. Duplexbremse; und
- Fig. 4: einen vereinfachten Regelkreis zur Durchführung des erfindungsgemäßen Verfahrens zur Regelung der Selbstverstärkung der in Fig. 1 bis 3 gezeigten Reibungs- bzw. Duplexbremse.

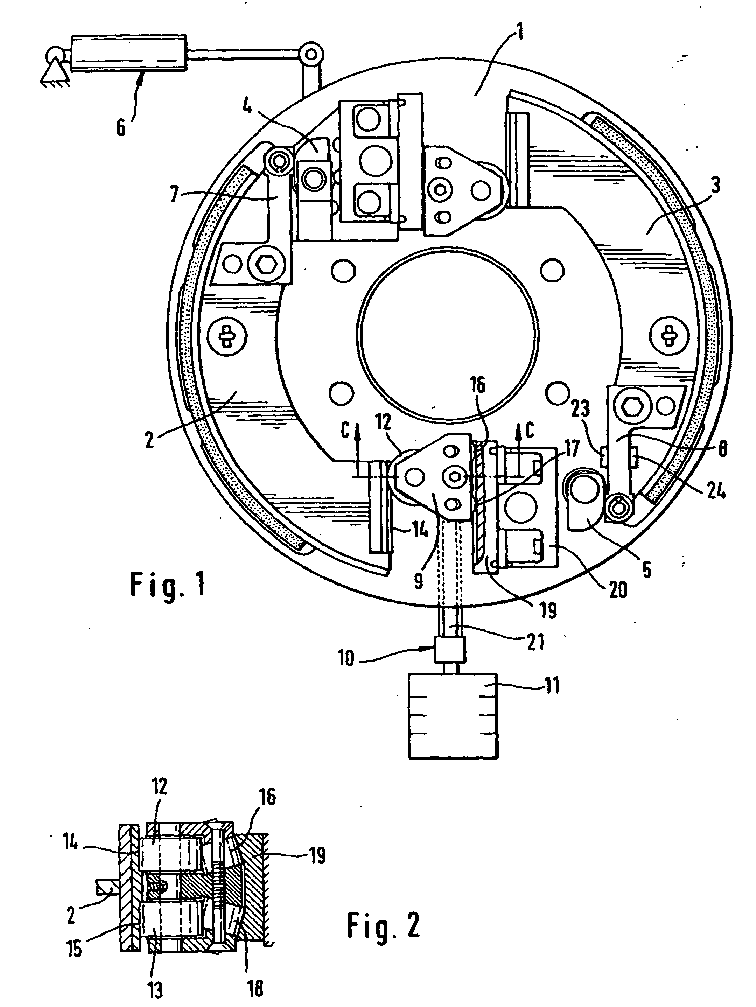

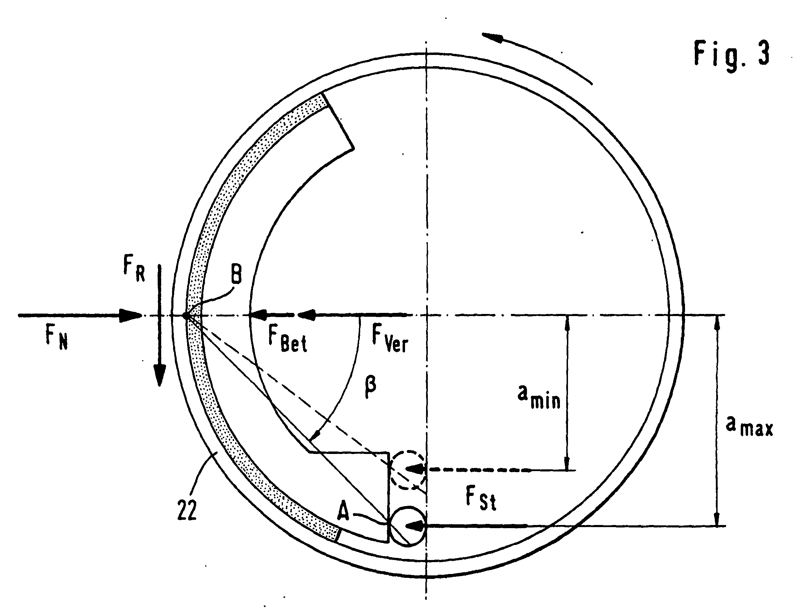

Die in Fig. 1 dargestellte Trommel- bzw. Duplexbremse weist einen Bremsträger 1 auf, auf dem zwei mit Bremsbelägen versehene Bremsbacken 2, 3 radial gegenüberliegend angeordnet sind, die über drehbar gelagerte Spannocken 4, 5 mittels einer Betätigungseinrichtung 6 betätigbar bzw. mit einer nicht gezeigten Bremstrommel in Eingriff brinbar sind. Die Spannocken 4, 5 wirken dabei über je ein mit der Bremsbacke 2, 3 verschraubtes Kraftübertragungsteil 7, 8 auf ein Ende der Bremsbacke 2, 3, deren anderes Ende über einen zentralen Kraftabstützpunkt A (s. Fig. 3) am Bremsträger 1 abgestützt ist. Das Kraftübertragungsteil 7,8 ist dabei vorzugsweise mit Kraftmesselementen, beispielsweise Dehnungsmessstreifen, versehen, die am Kraftübertragungsteil 8 schematisch angedeutet und mit den Bezugszeichen 23,24 versehen sind. Der Kraftabstützpunkt A ist bei der gezeigten Ausführung an einem vorzugsweise radial verstellbaren Schlitten 9 eines Verstellmechanismus gebildet, der das Bezugszeichen 10 trägt. Der Schlitten 9 wird vorzugsweise unter Zwischenschaltung eines Getriebes, beispielsweise eines lediglich schematisch angedeuteten Kugelgewindetriebs 21, durch einen elektrischen Schrittmotor 11 angetrieben und weist in Richtung seiner Hochachse zwei untereinander angeordnete, drehbar gelagerte Stützrollen 12, 13 auf, die mit zwei an der Bremsbacke 2 entsprechend ausgebildeten Laufbahnen 14, 15 zusammenwirken. Auf seiner der Bremsbacke 2, 3 abgewandten Seite ist der Schlitten 9 mit in Richtung seiner Hochachse untereinander angeordneten Rollenpaaren 16, 17 bzw. 18, - versehen, die mit einer vorzugsweise prismatisch ausgebildeten Führungsbahn 19 zusammenwirken, die mit dem Bremsträger 1 fest verschraubt ist. An der Führungsbahn 19 stützt sich eine Sensoreinrichtung 20 ab, die eine Ermittlung der zwischen der Bremsbacke 2 und der nicht gezeigten Bremstrommel wirkenden Reibkraft F_{R} (Fig. 3) ermöglicht.

Wie Fig. 3 zu entnehmen ist, kann bei der Ansteuerung des Schrittmotors 11 der durch die Stützrollen 12, 13 (Fig. 1, 2) gebildete Kraftabstützpunkt A mit der Stützkraft F_{St} in der Zeichnung von aₘₐₓ bis aₘᵢₙ verstellt werden, so dass eine Änderung des Winkels β zwischen der Verbindungslinie AB des zentralen Kraftangriffspunktes B zwischen Reibbelag 2 und der lediglich angedeuteten Bremstrommel 22 mit dem zentralen, durch die Stützrollen 12, 13 gebildeten Kraftabstütztpunkt A der Bremsbacke 2 einerseits und der Richtung der an der Bremsbacke 2 wirkenden Normalkraft F_{N} andererseits stattfindet. Die Normalkraft F_{N} setzt sich zusammen aus einer im Kraftangriffspunkt B wirkenden Betätigungskraftkomponente F_{Bet} sowie einer Verstärkungskraft F_{Ver}, die aus der Selbstverstärkung resultiert. Dabei findet an der Bremsbacke 2 eine Addition der senkrecht auf die Bremsbacke 2 wirkenden Betätigungskraftkomponenten F_{Bet} und der aus der Selbstverstärkung resultierenden Verstärkungskraft F_{Ver} statt, wobei die Summe der beiden Kräfte die im vorhergehenden Text erwähnte Normalkraft F_{N} bildet. Durch die Wirkung der Normalkraft F_{N} wird die zwischen der Bremsbacke 2 und der Bremstrommel 22 wirkende Reibkraft F_{R} erzeugt, die in eine am Fahrzeugrad wirkende Bremskraft umgewandelt wird.

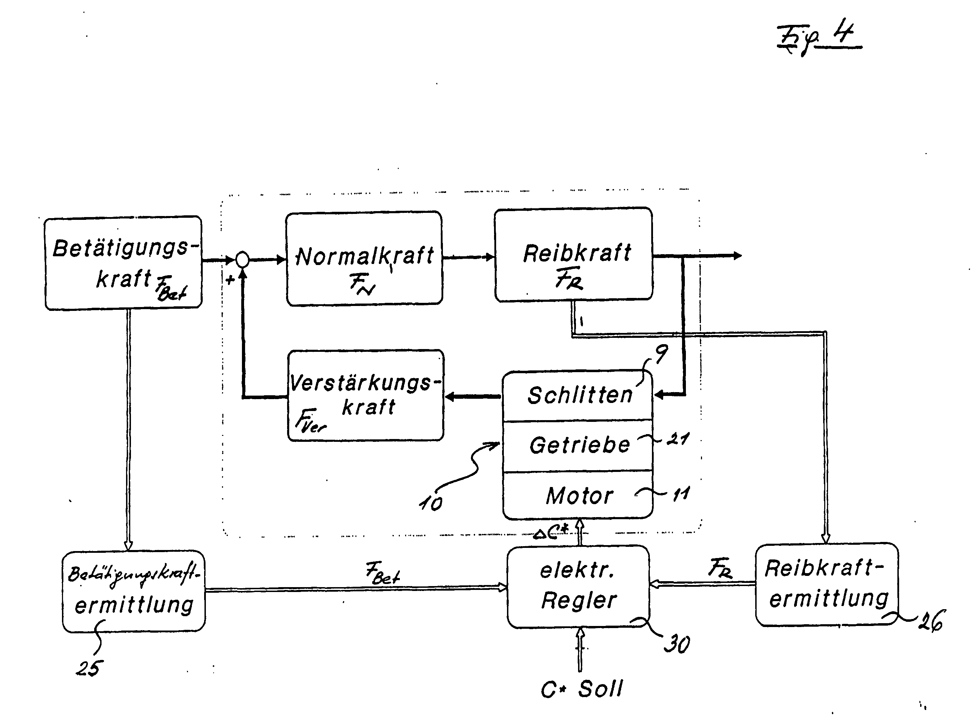

Die Durchführung des vorhin erwähnten Verfahrens zur Regelung der Selbstverstärkung einer selbstverstärkenden Reibungsbremse ist im Zusammenhang mit dem in Fig. 4 dargestellten Regelkreis erläutert. Die in Fig. 4 mit den Bezugszeichen 25 und 26 versehenen Blöcke stellen die Funktion der im Zusammenhang mit Fig. 1 erwähnten Kraftmesseinrichtung 7,8 bzw. 23,24 sowie der Sensoreinrichtung 20 dar, die der Ermittlung der am Reibbelag 2 wirkenden Betätigungskraft sowie der zwischen Reibbelag 2 und Bremstrommel 22 wirkenden Reibkraft dienen. Die den erwähnten Größen entsprechenden Signale F_{b} und Fᵣ werden zusammen mit einem die gewünschte Selbstverstärkung repräsentierenden Vorgabesignal C*ₛₒₗₗ einem elektronischen Regler 30 zugeführt, in dem aus den Eingangssignalen F_{b} und Fᵣ, sowie dem Abstand a (s. Fig. 3), die gerade wirkende Selbstverstärkung C*ᵢₛₜ ermittelt und eine Regelabweichung ΔC* gebildet wird. Der Regler berechnet für den aktuellen Wert C*ᵢₛₜ einen neuen Abstand a und vergleicht ihn mit dem im vorigen Regelschritt berechneten Wert a. Aus dem Ergebnis dieses Vergleichs wird die neue Position für a ermittelt. Hiernach beginnt der Regelzyklus von neuem. Das Ausgangssignal U des Reglers 30 dient der Ansteuerung des Schrittmotors 11 im Sinne der Änderung des im Zusammenhang mit Fig. 3 erläuterten Winkels β zum Zweck der Einstellung der gewünschten Selbstverstärkung C*ₛₒₗₗ bzw. Beeinflussung der Verstärkungskraft F_{Ver}.

## Patentansprüche

1. Verfahren zur Regelung der Selbstverstärkung (C*) einer selbstverstärkenden Reibungsbremse, bei der eine Addition der senkrecht auf den Reibbelag wirkenden Komponenten der Betätigungskraft und der durch die Selbstverstärkung bedingten Verstärkungskraft zu einer Normalkraft sowie eine Erzeugung der zwischen Reibbelag und Reibfläche wirkenden Reibkraft durch Wirkung der Normalkraft erfolgt, wobei die Reibungsbremse einen Verstellmechanismus zum Beeinflussen der Verstärkungskraft aufweist, und wobei ein die Reibkraft repräsentierendes Signal sowie ein die Betätigungskraft repräsentierendes Signal erzeugt werden, **dadurch gekennzeichnet, dass** das die Reibkraft repräsentierende Signal (F_{R}) sowie das die Betätigungskraft repräsentierende Signal (F_{B}) zusammen mit einem die gewünschte Selbstverstärkung repräsentierenden Signal (C*ₛₒₗₗ) als Eingangsgrößen einem elektronischen Regler (30) zugeführt werden, dessen Ausgangsgröße (U) der Ansteuerung des Verstellmechanismus (10) dient.

## Claims

1. Method of controlling the self-energization (C*) of a self-energizing friction brake wherein there is an addition of the components of the actuating force applied perpendicularly to the friction lining and the boosting force subject to the self-energization to become a normal force, and the friction force acting between the friction lining and the friction surface is generated by the effect of the normal force, wherein the friction brake includes an adjustment mechanism for influencing the boosting force, and a signal representative of the friction force and a signal representative of the actuating force are produced, **characterized in that** the signal (F_{R}) representative of the friction force and the signal (F_{S}) representative of the actuating force along with a signal (C*ₙₒₘᵢₙₐₗ) representative of the desired self-energization are sent as input quantities to an electronic controller (30), the output quantity (U) of which is used to actuate the adjustment mechanism (10).

## Revendications

1. Procédé de régulation de l'auto-amplification (C*) d'un frein à friction à auto-amplification, dans laquelle s'effectuent une addition des composantes agissant perpendiculairement sur la garniture de friction de la force d'actionnement et de la force d'amplification résultant de l'auto-amplification, en une force normale, ainsi qu'une génération de la force de friction agissant entre la garniture de friction et la surface de friction, par action de la force normale, le frein à friction comportant un mécanisme de réglage pour agir sur la force d'amplification, et un signal représentant la force de friction ainsi qu'un signal représentant la force d'actionnement étant générés, **caractérisé en ce que** le signal (F_{R}) représentant la force de friction ainsi que le signal (F_{B}) représentant la force d'actionnement sont amenés, avec un signal (C*ₛₒₗₗ) représentant l'auto-amplification voulue, en tant que grandeurs d'entrée, à un régulateur électronique (30) dont la grandeur de sortie (U) sert à commander le mécanisme de réglage (10).
